# EUROPÄISCHE PATENTSCHRIFT

(11) **EP 1 408 802 B1**
(45) Veröffentlichungstag und Bekanntmachung des Hinweises auf die Patenterteilung: **04.05.2005**
(21) Anmeldenummer: 02781120.7
(22) Anmeldetag: 07.10.2002
(51) Int. Cl.: A47G 29/14

(54) **ELEKTRONISCHE PAKETFACHANLAGE UND VERFAHREN ZU IHREM BETREIBEN**
ELECTRONIC DEVICE FOR PACKET BOXES AND RELATED OPERATING METHOD
DISPOSITIF ELECTRONIQUE DE CASIERS POUR COLIS ET PROCEDE DE FONCTIONNEMENT ASSOCIE

(30) Priorität: 09.10.2001 DE 10149622
(43) Veröffentlichungstag der Anmeldung: 21.04.2004
(73) Patentinhaber: Deutsche Post AG, 53113 Bonn (DE)
(72) Erfinder: MAYER, Boris, 53113 Bonn (DE); TUNA, Güldern, 53129 Bonn (DE)
(74) Vertreter: Jostarndt, Hans-Dieter, Dr. Dipl.-Phys.
(86) Internationale Anmeldenummer: PCT/DE2002/003760
(87) Internationale Veröffentlichungsnummer: WO 2003/032789

(56) Entgegenhaltungen:
- WO-A-00/51750
- WO-A-01/31593
- WO-A-01/63494
- DE-A- 10 000 830

## Beschreibung

Die Erfindung betrifft eine elektronische Paketfachanlage mit einer Benutzerschnittstelle, wobei die Benutzerschnittstelle ein Mittel zum Erfassen von Informationen von Benutzern der elektronischen Paketfachanlage aufweist.

Die Erfindung betrifft ferner ein Verfahren zum Betreiben einer elektronischen Paketfachanlage.

Eine gattungsgemäße elektronische Paketfachanlage ist aus der Französischen Patentschrift FR 2 563 987 bekannt. Bei dieser elektronischen Paketfachanlage erfolgt eine Identifikation und Autorisierung sowohl von Lieferanten, die Waren in das Fach einliefern als auch von Kunden, die Waren aus dem Fach abholen durch Identifikation mit einer Karte und Eingabe einer Geheimzahl in einem Bedienungsterminal zur Überprüfung der Identität des Inhabers der Karte.

Aus der deutschen Patentschrift DE 100 00 830 A1 geht eine Schließfachanlage hervor, die über einen Computer verfügt, der das elektronische Schließsystem der Schließfachanlage steuert und der die Zugangsberechtigungen für die Schließfachanlage verwaltet. Ein Zusteller, der sich durch ein elektronisches Schlüsselsystem identifiziert, kann nach Eingabe der Kundennummer des Abholers, die diesem als Adresse dient, ein geeignetes Fach auswählen und öffnen lassen. Nach der Bestückung des Fachs wird dieses geschlossen und kann nicht mehr durch den Zusteller geöffnet werden. Ein Abholer identifiziert sich ebenfalls durch ein elektronisches Schlüsselsystem anhand seiner Kundennummer und erlangt Zugriff auf diejenigen Fächer, die an ihn adressierte Sendungen enthalten. Dem Abholer ist es möglich, Rücksendungen einzulegen.

Die internationale Patentanmeldung WO 01/31593 A1 beschreibt ein elektronisches Auslieferungssystem, bei dem über ein Netzwerk bei einem Verkäufer bestellte Waren von einem Versandunternehmen in eine Schließfachanlage eingeliefert und von dem Kunden aus dieser entnommen werden. Die Benutzer der Schließfachanlage identifizieren sich durch einen Zugangsschlüssel und erlangen dadurch Zugriff auf die Funktionen der Schließfachanlage. Das Auslieferungssystem kann so betrieben werden, dass Verkäufer, Kunden und Versandunternehmen als einzelne Gruppen identifiziert werden, so dass Funktionen von mehreren Gruppen aufgerufen werden können.

Der Erfindung liegt die Aufgabe zugrunde, eine elektronische Paketfachanlage zu schaffen, die möglichst flexibel genutzt werden kann.

Erfindungsgemäß wird diese Aufgabe dadurch gelöst, dass die elektronische Paketfachanlage so ausgestattet wird, dass die elektronische Paketfachanlage ein Mittel zur Zuordnung der Benutzer zu Benutzergruppen aufweist und dass die elektronische Paketfachanlage mit einer Systemsteuerung versehen ist, die einem Benutzer Zugriff auf eine Auswahl mehrerer Funktionen der elektronischen Paketfachanlage in Abhängigkeit der Zuordnung des Benutzers zu einer Benutzergruppe gestattet.

Die Erfindung sieht insbesondere vor, eine elektronische Paketfachanlage mit verschiedenen Funktionsmodulen auszustatten, wobei ein Aufruf der einzelnen Funktionsmodule nur für bestimmte Benutzer zu ermöglichen ist.

Um eine möglichst hohe Flexibilität der Handhabung der Paketfachanlage mit einer hohen Sicherheit vor missbräuchlichem Zugriff auf geschützte Funktionen zu kombinieren und um eine besondere Flexibilität der Handhabung verschiedener Benutzer zu gewährleisten, erfolgt die Handhabung getrennt nach verschiedenen Benutzergruppen.

Eine Benutzergruppe stellt eine Gruppe von Personen mit dem gleichen Zugangsprofil zum Zustellautomaten dar, das heißt, mit gleichen Tätigkeiten am Zustellautomaten.

Die Erfassung der Benutzergruppe zu der ein Benutzer der Paketfachanlage gehört, kann auf verschiedene Weise erfolgen.

So ist es beispielsweise vorteilhaft, dass das Mittel zur Zuordnung der Benutzer in Benutzergruppen die Zuordnung aufgrund von über eine Datenleitung übermittelten Informationen vornimmt.

Eine zweckmäßige Ausführungsform der Paketfachanlage und des Verfahrens zu ihrem Betreiben zeichnet sich dadurch aus, dass das Mittel zur Zuordnung von Benutzern zu Benutzergruppen derart mit der Benutzerschnittstelle verbunden ist, dass ihm die von der Benutzerschnittstelle erfassten Informationen für die Zuordnung der Benutzer zur Verfügung stehen.

Eine besonders bevorzugte Ausführungsform der Paketfachanlage und des Verfahrens zu ihrem Betreiben beinhaltet, dass die Zuordnung zu den Benutzergruppen durch Erfassung einer Benutzeridentifikationsangabe und einen Vergleich der Benutzeridentifikationsangabe mit einem Inhalt einer Datenbank erfolgt.

Ferner ist es vorteilhaft, dass für verschiedene Benutzergruppen unterschiedliche Zugangsberechtigungen zu Funktionen der elektronischen Paketfachanlage auswählbar sind.

Ferner ist es zweckmäßig, dass einzelne Paketfächer und/oder Gruppen von Paketfächern nur für einzelne Benutzergruppen zugänglich sind.

Hierdurch ist es möglich, verschiedene Klassifizierungen von Benutzern und verschiedene Dienstleistungsqualitäten anzubieten.

Durch die Zuordnung verschiedener Paketfächer und/oder Bereiche von Paketfächern ist eine Abstufung von Zustellungsqualitäten möglich.

Beispielsweise lässt sich ein Premium-Dienst realisieren, der eine garantierte Zustellform beinhaltet.

Eine derartige Premium-Zustellmöglichkeit eignet sich insbesondere für einen Versand hochwertiger und/oder dringender Güter wie Medikamente oder Ersatzteile von wichtigen Anlagen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

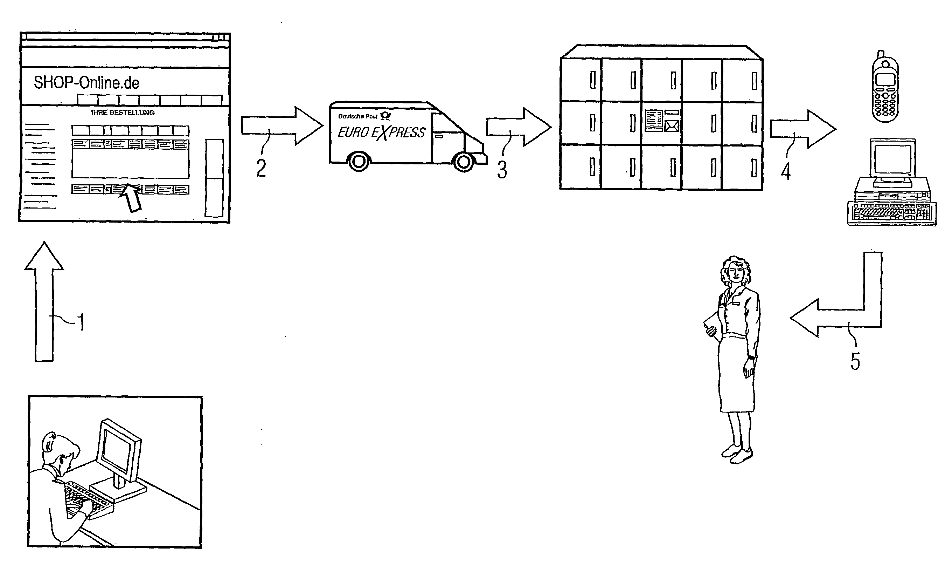

Von den Abbildungen zeigt
- Fig. 1: eine Prinzipdarstellung einer erfindungsgemäßen Paketfachanlage;

Die nachfolgende Darstellung zeigt eine Implementation der Erfindung am Beispiel eines umfassenden Logistiksystems mit sechs verschiedenen Benutzergruppen.

Sowohl die Anzahl der Benutzergruppen als auch die ihnen zugeordneten abrufbaren Funktionen der elektronischen Paketfachanlage sind frei veränderbar.

Insbesondere ist das Beispiel von sechs verschiedenen Benutzergruppen auch auf eine beliebige Anzahl von Benutzergruppen übertragbar. Die Anzahl ist angepasst an die Eigenschaften der Paketfachanlage, des Verfahrens zu ihrem Betreiben und des Logistiksystems.

Es ist jedoch besonders zweckmäßig, die folgenden Benutzergruppen vorzusehen:
- Automatenzusteller des Postversandunternehmens (Zusteller),
- Kunde (Registrierte Empfänger),
- B2B-Kunde (Registrierte B2B Empfänger),
- Zusteller-B2B
- Wartungstechniker (Master) und
- Automatenhersteller,

Wie aus Fig. 1 ersichtlich ist, steht nach Einschub der Kundenkarte die Call-Center-Funktionalität für alle Benutzergruppen zur Verfügung. Nachdem der Empfänger oder Zusteller seine Kundenkarte eingeschoben hat, verbleibt diese vorzugsweise nicht im Lesegerät. Sie wird sofort wieder ausgeworfen, damit bei Problemen die auf der Karte eingedruckte Postnummer im Rahmen der Call-Center-Funktionalität genutzt werden kann.

Anhand eines erfassbaren Kriteriums wird einem Benutzer eine Benutzergruppe zugeordnet. Die Zuordnung kann fest erfolgen, beispielsweise dadurch, dass bestimmte Identifikationscodes oder Nummernkreise nur an bestimmte Benutzerkreise erfolgen. Es ist jedoch gleichfalls zweckmäßig, dass eine dynamische Zuordnung von Benutzern zu Benutzergruppen erfolgt.

Eine derartige dynamische Zuordnung der Benutzer zu Benutzergruppen erfolgt beispielsweise dadurch, dass Daten zur Zuordnung der Benutzer zu Benutzergruppen von einem geeigneten Server übermittelt werden.

Die Zuordnung der Benutzer erfolgt vorzugsweise parallel zu Authentifizierung der Benutzer.

Bei erfolgreicher Anmeldung wird das Benutzermenü der jeweiligen Benutzergruppe angezeigt.
1. Ein Benutzer kommt zum Automat.
2. Der Automat fordert am Bildschirm dazu auf, eine Kundenkarte einzuschieben.
3. Die Kundenkarte wird eingeschoben. Dieser Vorgang wird durch eine Darstellung am Automaten beschrieben, des Weiteren sollte eine Abbildung der Kundenkarte am Einschub vorhanden sein.
4. Die Postnummer wird von der Karte gelesen. Sollte dies nicht möglich sein, wird der Empfänger zur manuellen Eingabe der Postnummer aufgefordert.
5. Es wird eine Prüfung der Postnummer vorgenommen. Ist diese falsch, wird sie erneut manuell angefordert. Dies geschieht bis zur dritten manuellen Eingabe, wonach ein Verweis auf die Hotline gegeben wird. Der Automat geht jetzt oder nach 30 Sekunden ohne Eingabe wieder zu Punkt 1 zurück.
6. Bei stimmiger Postnummer fordert der Automat zur Eingabe der PostPin auf. PostPin ist, eine persönliche Indentifikationsnummer. Sie dient zur Indentifizierung am Automaten. Die Prüfung besteht darin, die PostPin auf ihre Zugehörigkeit zur Postnummer zu prüfen. Die PostPin muss nach der dritten falschen Eingabe (bei Zustellern der fünften Eingabe), für 24 Stunden gesperrt werden. Darüber hinaus ist der Karteninhaber über die Sperrung und über die Möglichkeit, sich durch das Call Center wieder freischalten zu lassen, per eMail oder SMS zu benachrichtigen. Es ist zweckmäßig, dass nach einem vorgebbarem Zeitintervall eine gesperrte PostPin wieder freigeschaltet werden kann, beziehungsweise automatisch wieder freigeschaltet wird. Stimmt die PostPin zur Kundennummer, wird anhand der Postnummer der Benutzertyp festgestellt. Die Benutzertypen werden von der elektronischen Paketfachanlage vorzugsweise durch Nummernkreise innerhalb der Postnummer definiert.
8. Der Benutzer kommt ins jeweilige Startmenü seiner Benutzergruppe.

Einzelne Funktionsprofile der verschiedenen Benutzergruppen sind nachfolgend dargestellt:

Der Zusteller entnimmt der Paketfachanlage Sendungen, deren Aufbewahrungszeiten abgelaufen sind, um sie zurückzusenden.

Der Zusteller beliefert ferner die Paketfachanlage mit Postsendungen. Vorzugsweise sind die Postsendungen Postpakete, Päckchen und Nachnahmepakete. Bei den Postsendungen kann es sich jedoch gleichfalls um Briefe handeln.

Der Zusteller des Versanddienstleisters hat vorzugsweise keinen Zugriff auf den für B2B Zusteller reservierten Bereich des Automaten.

### Empfänger

Dieser Benutzergruppe sind im ersten Schritt solche Benutzer zugeordnet, die nur Sendungen aus der Paketfachanlage abholen, im zweiten Schritt soll auch in die Paketfachanlage eingeliefert werden können. Hierzu sind Retouren und Prepaid-Produkte prädestiniert.

### B2B Empfänger

Im Unterschied zu den zuvor genannten Empfängern können B2B Empfänger nicht nur Sendungen am Automaten abholen, sondern auch Retouren für den B2B Zusteller hinterlegen.

Eine Retoure im B2B Bereich bezeichnet Sendungen, Sendungsteile oder Behälter, die dem Versender zurückgeführt werden sollen oder müssen.

Bei der Einlieferung von Retouren sind sie auf den B2B-Bereich am Automaten beschränkt. B2B Empfänger können im Benutzermenü "Retoure einliefern" auswählen, dann wird eine Übersicht der freien Fächer (je Fachgröße) angezeigt und der B2B Empfänger wählt ein Fach aus und kann nach Öffnung seine Retoure einlegen.

### B2B Zusteller

Der B2B Zusteller liefert Sendungen für B2B Empfänger ein und holt gegebenenfalls die von diesen Empfängern hinterlegten Sendungen ab. Es ist empfehlenswert, die Fächer des B2B Bereichs eines Automaten von ihrer Position her zusammenzulegen. Der B2B Empfänger und der B2B Zusteller finden sich so besser am Automaten zurecht.

Der B2B Zusteller hat Zugriff auf alle Fächer im B2B Bereich des Automaten, das heißt, er kann dort bei Bedarf alle leeren Fächer vom Automaten öffnen lassen, zum Beispiel Schnellbeladung bei Locker-Systemen.

Eine Schnellbeladung ist eine Massenbeladung eines Automaten durch Öffnung mehrerer Paketfächer, vorzugsweise eines gesamten Segmentes von Fächern.

### Wartungstechniker

Im Grunde sollte der Wartungstechniker alle Tätigkeiten am Automaten durchführen können. Er soll vor Ort gegebenenfalls Sendungen für Empfänger entnehmen und über eine Sonderzustellung diesen übermitteln. Die Funktionsverteilung in der elektronischen Postfachanlage ist so gestaltet, dass entsprechend autorisierte Mitarbeiter sowohl Rücksendungen entnehmen als auch Sendungen zustellen und Sendungen abholen können. Bei einer besonders hohen Berechtigungsstufe können diese Tätigkeiten für sämtliche Bereiche der Paketfachanlage erfolgen. Diese besonders hohe Berechtigungsstufe beinhaltet die Möglichkeit, auf Wartungs- und Fehlerüberprüfungsfunktionen der Paketfachanlage zuzugreifen und alle Fächer der Paketfachanlage zu öffnen. Diese Zugriffsrechte werden mit einer Master-Kundenkarte und einer PostPinauthentisiert. Nach Eingabe der Postnummer des reklamierenden Empfängers werden die Sendungen angezeigt. Alle gewöhnlichen Pakete können sofort entnommen werden. Sendungen mit Nachnahmen werden entnommen und analog der postalischen Standardverfahren (mit Handliste und Ersatzzahlschein) und Scanner ausgeliefert.

### Automatenhersteller

Die Mitarbeiter der Automatenhersteller oder die Mitarbeiter beauftragter Unternehmen können alle Tätigkeiten am Automaten durchführen, die sie für die Erbringung ihrer Leistung gemäß technischer Leistungsbeschreibung benötigen.

### Übersicht Benutzergruppen

| Gruppen Aufgaben | Standard Zusteller | Standard Empfänger | B2B Empfänger | B2B Zusteller | Wartungstechniker | Automatenhersteller |
|---|---|---|---|---|---|---|
| Sendungen empfangen | √ | √ | √ | √ | √ | |
| Sendungen zustellen | √ | | | √ | √ | |
| Instandhaltung/ Wartung | | | | | √ | √ |
| Retoure einlegen | | | √ | | | |

Wie bereits beschrieben, kann aufgrund der Authentisierung zwischen den Benutzergruppen unterschieden werden. Der Benutzer kommt nach der Authentisierung in ein Menü für seine Benutzergruppe, in dem er die für seine Benutzergruppe freigegebenen Tätigkeiten auswählen kann.

Die Authentisierung erfolgt vorzugsweise durch:
1. Einschub der Goldcard
2. Prüfung der Benutzergruppe
3. Eingabe der PostPin
4. Prüfung der Postnummer und PostPin
5. Öffnen des ersten Benutzergruppenmenüs

Empfänger mit Standardbenutzungsberechtigung und B2B Empfänger können Sendungen am Automaten abholen unter Einschub der Goldcard, beziehungsweise durch manuelle Eingabe der Postnummer und der PostPin. B2B Empfänger können des Weiteren Retouren einstellen.

Obwohl es zweckmäßig ist, einzelne Funktionen nur bestimmten Benutzergruppen zuzuordnen, ist es andererseits vorteilhaft, bestimmte Grundfunktionen für die meisten Benutzergruppen zur Verfügung zu stellen. Derartige Grundfunktionen beinhalten:
- Anwählbarkeit einer Hotline - insbesondere nach Einschub einer Benutzerkarte.
- Zugriff auf eine Option "beenden". Diese Option beinhaltet eine Abmeldung des Benutzers von der Paketfachanlage und führt zweckmäßigerweise zu einer Rückgabe einer eingegebenen Benutzerkarte an den Benutzer.
- Der Automat soll dem Benutzer (Zusteller) einen zahlenmäßigen Status zu den einzelnen Tätigkeitsoptionen geben. Liegen zum Beispiel 5 Sendungen als Rücksendungen vor, soll "Rücksendungen (5)" angezeigt werden. Im Menü "Sendungen einlegen" soll die Anzahl freier Fächer angezeigt werden. Im Untermenü "Defektes Fach anzeigen" analog die Anzahl der defekten Fächer sowie deren Fachnummer.

Die dargestellte elektronische Paketfachanlage kann auf verschiedene Weise betrieben werden. Nachfolgend werden besonders bevorzugte Ausführungsbeispiele des Verfahrens dargestellt.

Das Verfahren beinhaltet eine automatisierte Steuerung von Funktionen innerhalb der elektronischen Paketfachanlage.

Diese automatisierten Funktionen sind vorzugsweise mit einer Benutzerschnittstelle verbunden.

Obwohl grundsätzlich alle Funktionen automatisiert sein können, hat die Implementation der Benutzerschnittstelle die Funktion, das Verfahren variieren zu können.

Erfindungsgemäß beinhaltet die Benutzerschnittstelle verschiedene Menüs für die unterschiedlichen Benutzergruppen.

Vorzugsweise werden die jeweiligen Menüpunkte in der nachfolgenden Reihenfolge dargestellt und die entsprechenden Funktionen innerhalb der elektronischen Paketfachanlage bearbeitet.

Die Menüpunkte werden zweckmäßigerweise zumindest teilweise durch Statusinformationen ergänzt, die nachfolgend jeweils in Klammern stehen.

### Standard-Zusteller

1. Rücksendungen abholen (Anzahl der Rücksendungen DPAG)
2. Sendungen einlegen - Die Absenderinformation wird bei Nachnahmesendungen vom DPAG Zusteller beim Beladen des Automaten eingegeben, damit der Empfänger dem Absender einer Nachnahmesendung ersichtlich ist - (Anzahl der freien Fächer je Fachgrößengruppe DPAG)
3. Defektes Fach anzeigen (Anzahl der defekten Fächer DPAG; Fachnummer(n))
4. Beenden

### Empfänger

Da diese Benutzergruppe nur Sendungen, die für sie hinterlegt wurden, abholen kann, ist ein Menü der möglichen Tätigkeiten redundant. Wenn zu einem späteren Zeitpunkt mehrere Optionen für DPAG Empfänger möglich werden, kann das Menü modifiziert werden.
1. Es werden alle Sendungen, die für den Benutzer hinterlegt sind, aufgelistet. Bei Nachnahmesendungen werden der Nachnahmebetrag und die Absenderinformation angezeigt. Der DPAG Empfänger wird dazu aufgefordert eine Sendung auszuwählen. Es wird dann weiter nach der Tätigkeit "Sendungen abholen" verfahren. Sollten keine Sendungen für den angemeldeten Empfänger vorhanden sein, wird ihm dies mit "Keine Sendungen vorhanden" angezeigt.
2. Unter der Liste der Sendungen gibt es die Option "Beenden",

### B2B Empfänger

1. Da diese Benutzergruppe hauptsächlich hinterlegte Sendungen abholt, sollten diese analog der DPAG Empfänger-Benutzerführung angezeigt werden. Der B2B Empfänger kann nur Sendungen aus dem B2B Bereich abholen. Alle Sendungen werden auf dem Display aufgelistet. Es werden alle Sendungen angezeigt, die für den Benutzer hinterlegt sind. Der B2B Empfänger wird dazu aufgefordert eine Sendung auszuwählen. Es wird dann nach der Tätigkeit "Sendungen abholen" weiter verfahren. Sollten keine Sendungen für den angemeldeten Empfänger vorhanden sein, wird ihm dies angezeigt.
2. Unter der Liste der Sendungen gibt es die Option "Retoure einlegen". Nachdem dieser Punkt gewählt wurde, kann eine Fachgröße ausgewählt werden. Das Fach öffnet sich und die Retoure kann (ohne Scannen) eingelegt und das Fach geschlossen werden.
3. Unter der Option "Retoure einlegen" gibt es die Option "Beenden".

### B2B Zusteller

Im Gegensatz zum Innendienst/Sonderfahrer DPAG ist der B2B Zusteller gleichzeitig auch B2B Kunde, er kann also auch Sendungen abholen. Daraus ergibt sich folgendes Menü:
1. Retoure abholen
   (Anzahl der Rücksendungen und Retouren B2B)
2. Sendungen abholen
   (Anzahl der hinterlegten Sendungen anzeigen)
3. Sendungen einlegen
   (Anzahl der freien Fächer je Fachgrößengruppe B2B)
4. Fach öffnen
5. Defektes Fach anzeigen
   (Anzahl der defekten Fächer B2B)
6. Beenden

### Wartungstechniker

Die Wartungstechniker haben Masterfunktion und sollen alle Tätigkeiten am Automaten ausüben können. Dies bedeutet Zugriff auf den DPAG Bereich und auf den B2B Bereich.

Die Optionen "Sendungen abholen", "Fach öffnen" und "Defektes Fach anzeigen" beziehen sich, für Post24-Mitarbeiter, auf den gesamten Automaten.

Es ergibt sich folgendes Menü:
1. Rücksendungen abholen
   (Anzahl der Rücksendungen DPAG)
2. B2B-Rücksendungen abholen
   (Anzahl der Rücksendungen B2B)
3. Sendungen einlegen
   (Anzahl der freien Fächer DPAG)
4. B2B-Sendungen einlegen
   (Anzahl der freien Fächer B2B)
5. Sendungen abholen
   (Anzahl der hinterlegten Sendungen anzeigen)
6. Fach öffnen
7. Defektes Fach anzeigen
   (Anzahl der defekten Fächer)
8. Beenden

### Automatenhersteller

Mitarbeiter der Automatenhersteller oder Mitarbeiter durch diese beauftragter Unternehmen benötigen Tätigkeiten, die sie zur Erfüllung ihrer Leistungen gemäß technischer Leistungsbeschreibung brauchen.

Die Darstellung der möglichen Tätigkeiten ist lediglich beispielhaft zu verstehen und kann entsprechend den betrieblichen Anforderungen verändert und ergänzt werden.

Die Zuordnung von Benutzern zu Benutzergruppen ist auch für den Zugriff auf andere Funktionen der Paketfachanlage zweckmäßig.

Beispiele derartiger Funktionen sind nachfolgend dargestellt:

### Sendungen abholen (Standard)

Alle Sendungen, die für einen Empfänger bestimmt sind, werden nach Lagerdauer (First in first out) aufgelistet. Die Sendungen können dann per Einzelanwahl auf dem Display nacheinander entnommen werden (nicht zwingend entsprechend der Lagerdauer). Nach Schließen der Fachtür ist mit "Weiter" zu bestätigen. Die Sendungsliste wird nun automatisch aktualisiert und im Display angezeigt.

Handelt es sich um eine Sendung ohne Nachnahme, wird diese zur Entnahme bereitgestellt. Das Fach öffnet sich. Der Empfänger wird am Bildschirm zur Entnahme aufgefordert, entnimmt das Paket und schließt gegebenenfalls die Tür. Es gibt die Bestätigungsfelder "Weiter" und "Keine erfolgreiche Entnahme". Diese Information wird vom Automaten aufgenommen und weiter verarbeitet. Die aktualisierte Sendungsliste wird nach Bestätigung "Weiter" angezeigt, so lange noch Sendungen vorhanden sind. Danach wird wieder das Benutzermenü, je nach "Benutzergruppe, angezeigt.

Die Zahlung von Nachnahmen wird gegebenenfalls durch die Hardware des Herstellers der Zahlungsfunktion, also Kartenleser und PIN-Feld, vorgegeben (die Menüführung für die Kartenzahlung wird vom Lieferanten der Kartenlesegeräte abgebildet). Diese sind unbedingt zu beachten. Der Zahlungsvorgang sollte, unter Berücksichtigung der oben genannten Restriktionen, wie folgt aussehen.

Die Sendungsinformationen mit Nachnahmebetrag und Absenderinformation werden angezeigt. Der Benutzer wird dazu aufgefordert, seine EC- oder Geldkarte einzuschieben.

Sollte es eine EC-Karte sein, wird diese gelesen und zur Eingabe der EC-Karten-PIN aufgefordert. Es gibt ein Feld "Abbrechen", mit dem der Empfänger wieder in sein Benutzermenü kommt. Dem Empfänger muss klar signalisiert werden, dass er mit der Eingabe der PIN eine Zahlung autorisiert. Nach ihrer Eingabe wird die Prüfung angestoßen. Nach erfolgreicher Zahlung wird die Karte bereitgestellt. Sollte die Entnahme nicht erfolgreich sein, wird angezeigt, ob die Zahlung erfolgte oder nicht.

Ist der EC-Karten-PIN nicht korrekt, wird er erneut angefordert, solange noch Versuche zulässig sind.

Handelt es sich um eine Geldkarte, muss der Benutzer nur die Zahlung bestätigen, zum Beispiel "Zahlung durchführen" oder "Keine Zahlung tätigen". Bei "Zahlung durchführen" wird der Chipbetrag reduziert, anderenfalls wird in das Benutzermenü zurückgegangen. Sollte der Chipbetrag nicht ausreichen, muss dies angezeigt werden und der Vorgang abgebrochen werden, da keine Teilzahlungen erfolgen dürfen.

Zur erfolgreichen Zahlung wird eine Quittung ausgedruckt, die Datum, Uhrzeit, Nachnahmebetrag, Identcode, Absender, Post24-Kundennummer und MwSt enthält. Die Sendung kann nun entnommen werden.

Die Post24-Kundennummer ist ein Beispiel einer Empfängeridentifikationsangabe. Die Datenlänge der Empfängeridentifikationsangabe ist variabel und sollte vorzugsweise so gewählt werden, dass sowohl eine große Anzahl von Abnehmern realisiert werden kann als auch eine Implementation von Zusatzangaben, beispielsweise eine Prüfziffer, ermöglicht wird. Im dargestellten Fall handelt es sich um eine vorzugsweise etwa 10-stellige Nummer, die bei der Registrierung einem Empfänger zugeordnet wird, und die in einer vorteilhaften Ausführungsform der Erfindung als Namenszusatz zur Lieferadresse gehört.

Nach erfolgreicher Zahlung, bei Abbrechen oder zu vielen Fehlversuchen der PIN-Eingabe wird die EC- oder Geldkarte wieder bereitgestellt. Der Empfänger wird aufgefordert, seine Karte zu entnehmen. Der Benutzer könnte nach erfolgreicher Entnahme einer Nachnahmesendung seine EC- oder Geldkarte entnehmen und den Automaten verlassen, ohne sich mit Beenden abzumelden. Nach Erreichen einer vorgegebenen Zeitspanne erfolgt ein automatisches Log-Out.

### Sendungen abholen (B2B)

Nachdem der Benutzer eine für ihn hinterlegte Sendung ausgewählt hat, wird diese zur Entnahme bereitgestellt. Das Fach öffnet sich. Der Empfänger wird am Bildschirm zur Entnahme aufgefordert. Es gibt die Bestätigungsfelder "Weiter" und "Keine erfolgreiche Entnahme". Diese Information wird vom Automaten aufgenommen und weiter verarbeitet. Danach wird wieder das Benutzermenü, je nach Benutzergruppe, angezeigt. Die Entnahmeinformation soll hier schon eingehen, das heißt, erfolgreiche Entnahmen werden nicht mehr angezeigt und nicht erfolgreiche Entnahmen als solche gekennzeichnet.

### Retoure einlegen

B2B Empfänger haben die Option Retouren einzulegen. Hat der Benutzer während einer Anmeldung bereits eine Sendung entnommen, so kann er auswählen, dass die Sendungen in dem Fach hinterlegt wurden, aus dem er eine Sendung entnommen hat. Anschließend werden die verfügbaren Fächer je Fachgrößengruppe kumuliert angezeigt.

Wurde noch keine Sendung entnommen oder passte die Sendung nicht in das Fach, so werden dem Benutzer die freien Fächer je Fachgrößengruppe des B2B Bereiches angezeigt. Er kann jetzt eines über den Touchscreen auswählen oder "Abbrechen", falls die Sendung zu groß für die vorhandenen Fächer ist. Nach Einlegen der Sendung bestätigt der Benutzer mit "Weiter". Hiernach oder nach "Abbrechen" kommt er wieder in sein Benutzermenü.

Sendungen einlegen (Standard)
a) Gewöhnliche Sendungen einlegen
   Nach der Auswahl des Menüpunkts "Sendungen einlegen", wird nach der Postnummer des Empfängers gefragt. Die Postnummer ist die Post24-Kundennummer des Empfängers der Sendung. Diese kann gescannt oder manuell erfasst werden. Es gibt ein Feld "Abbrechen", über das der Benutzer wieder in das Benutzermenü kommt.
   Nach Eingabe der Postnummer wird der Identcode der Sendung abgefragt, auch dieser kann wieder gelesen oder manuell erfasst werden. Es muss dem Benutzer ein Feld "Sendung ohne Identcode" angeboten werden, da auch Päckchen, die nicht über einen Identcode verfügen, am Automaten zugestellt werden sollen.
   Es gibt ein Feld "Abbrechen", über das der Benutzer wieder in das Benutzermenü kommt.
   Mit der Auswahl "Sendung ohne Identcode" wird eine Auswahl der freien Fächer im Standard-Bereich angezeigt, woraus ein Fach ausgewählt werden kann. Bei Paternostersystemen kann diese Auswahl über die zur Verfügung stehenden Fachgrößen oder die Schnellbeladung erfolgen. Hier gibt es ein Feld "Abbrechen", über das der Benutzer wieder in das Benutzermenü kommt. Zu beachten ist hier, dass in Paternostersystemen die Zuordnung einer Sendung zu einem Fach über einen scan des Identcodes und der Fachnummer erfolgt.
   Der Benutzer muss angeben "Beladung erfolgreich", "Fach zu klein" oder "Abbrechen". Mit "Abbrechen" kommt er zurück zur Eingabe der Kundennummer, wie auch mit "Beladung erfolgreich", wobei hier die Sendung als eingelegt gewertet wird. Bei "Fach zu klein" wird nach Möglichkeit ein größeres Fach angeboten.
b) Sendungen mit Nachnahme eingelegt
   Mit der "Eingabe des Identcodes einer Sendung mit Nachnahme, per scan oder manuell, wird über einen speziellen Menüpunkt die Eingabe von Nachnahmeinformationen ermöglicht. Es muss möglich sein, einen Nachnahmebetrag in EURO oder DM und eine Absenderinformation einzugeben. Hierzu muss eine virtuelle Tastatur zur Verfügung stehen. Es gibt auch ein Feld "Abbrechen", über das der Benutzer zur Eingabe der Postnummer zurückkommt. Es gibt eine Fachauswahl, über die Automatenansicht, die Fachgrößen oder die Schnellbeladung.
   Der Benutzer muss angeben "Weiter", "Fach zu klein" oder "Abbrechen". Mit "Abbrechen" kommt er zurück zur Eingabe der Kundennummer, wie auch mit "Beladung erfolgreich", wobei hier die Sendung als eingelegt gewertet wird und für Empfänger nur gegen Begleichen des Nachnahmebetrages zugängig gemacht wird. Bei "Fach zu klein" wird nach Möglichkeit ein größeres Fach angeboten.
   Die Schnellbeladung kommt bei Paternostersystemen zur Anwendung. Wird diese ausgewählt, so wird ein gesamtes Fachsegment geöffnet und zur Beladung freigegeben. Die Fachauswahl wird vom Benutzer getroffen und dem Automaten durch Scannen der Fachnummer bei erfolgreicher Beladung angezeigt. Bis auf diese Fachauswahl bleiben die oben genannten Abläufe bestehen.

### B2B Sendungen einlegen

Nach Lesen der Kundenkarte, Eingabe der PostPin und der Auswahl des Menüpunkts "B2B-Sendungen zustellen" wird nach der Postnummer gefragt, für die eine Sendung am Automaten zugestellt werden soll. Die Postnummer ist die Post24-Kundennummer des Empfängers der Sendung. Diese kann gescannt oder manuell erfasst werden. Es gibt ein Feld "Sendung einlegen" und ein Feld "Abbrechen". Mit "Abbrechen" kommt der Benutzer zurück ins Benutzermenü. Mit "Sendung einlegen" bestätigt der B2B Zusteller die Eingabe der Kundennummer, und eine Fächerauswahl der verfügbaren Fächer (kumuliert nach Fachgrößengruppen) des B2B-Bereichs wird angezeigt. Er kann nun eine Fachgröße auswählen oder "Abbrechen". (Sollte eine Fächerauswahl nicht möglich sein, zum Beispiel bei Paternostersystemen, so werden die zur Verfügung stehenden Fachgrößen angezeigt.) Auch bei Paternostersystemen ist es möglich, einzelne Fächer zu beladen. Das nach Nummer und Größe ausgewählte Fach wird geöffnet und der Benutzer kann mit "Beladung erfolgreich" bestätigen oder falls vorhanden mit "Fach zu klein" ein größeres Fach anfordern, oder mit "Abbrechen" ins Benutzermenü zurückkehren. Nach "Weiter" kommt er wieder zur Eingabe der Kundennummer, um gegebenenfalls weitere Sendungen einzustellen. Sollte "Fach zu klein" ausgewählt werden, bekommt er ein größeres Fach. Hier kann der Benutzer wie zwischen "Weiter", "Fach zu klein" und "Abbrechen" wählen.

### Rücksendungen abholen

Rücksendungen sind Sendungen, die die Lagerfrist überschritten haben und die dann weitergesendet oder an den Absender zurückgesendet werden.

### Standard-Rücksendungen

Nach Authentisierung als Standard-Zusteller ist als erster Pflichtprozessschritt die Entnahme der Rücksendungen anzuzeigen und abzuarbeiten. Dem Zusteller wird ein Feld "Abbrechen", das ihm zum Benutzermenü zurückkehren lässt und ein Feld "Rücksendung entnehmen" angezeigt, das alle Rücksendungen frei gibt. Wenn der Standard-Zusteller diesen Punkt auswählt, werden ihm alle Sendungen im Standard-Bereich des Automaten ausgegeben, die zur Rücksendung anstehen, das heißt, deren Verweildauer im Automaten abgelaufen ist.

Es wird mit "Entnahme erfolgreich" die Sendung als entnommen gekennzeichnet. Mit "Keine erfolgreiche Entnahme" die Sendung als nicht entnommen gekennzeichnet. Stehen keine weiteren Rücksendungen mehr an, kommt der Benutzer automatisch ins Benutzermenü zurück.

### Retoure B2B

Wenn der B2B Zusteller diesen Punkt auswählt, werden ihm alle Sendungen im B2B-Bereich des Automaten angezeigt, die zur Rücksendung anstehen, das heißt, deren Verweildauer im Automaten abgelaufen ist und alle mit "Retouren einlegen" hinterlegten Sendungen aufgelistet. Er bekommt ein Feld "Abbrechen", das ihn zum Benutzermenü zurückkehren lässt. Ein Feld "Rücksendung entnehmen" gibt eine Rücksendung/Retoure frei.

Es wird mit "Weiter" die Sendung als entnommen gekennzeichnet, mit "Keine erfolgreiche Entnahme" die Sendung als nicht entnommen gekennzeichnet. Stehen keine weiteren Rücksendungen mehr an, kommt der Benutzer automatisch ins Benutzermenü zurück.

### Fach öffnen

### Notleerung

Der Wartungstechniker (Master) kann alle Fächer im Standard-Bereich über diesen Menüpunkt öffnen. Es werden folgende Auswahlkriterien angeboten: "Nach Fachnummer", "Nach Identcode", "Nach Kundennummer" und "Nach System-ID".
- "Nach Fachnummer" bedeutet die Nummer des Fachs am Automaten, was bei Paternostersystemen nicht möglich sein kann, da die Fachnummern nicht ersichtlich sind.
- "Nach Identcode" meint den Identcode der Sendung. Sollte es wider Erwarten mehrere Sendungen mit dem gleichen Identcode geben, wird eine Liste angezeigt, aus der eine Sendung ausgewählt werden kann.
- Nach Kundennummer" meint die Post24-Kundennummer. Sollte es mehrere Sendungen für den gleichen Empfänger geben, wird eine Liste angezeigt, aus der eine Sendung ausgewählt werden kann.
- "Nach System-ID" heißt nach der im Post24-System angelegten Parcel-ID.

Im Auswahlmenü, mit den Auswahlkriterien und unterhalb der Liste soll ein Feld "Abbrechen" eine Rückkehr zum Benutzermenü ermöglichen.

Wurde ein Fach ausgewählt, muss der Zweck der Öffnung abgefragt werden. Dies kann "Zur Entnahme" oder "Zur Kontrolle" sein. Handelt es sich um ein leeres Fach, das über die Fachnummer ausgewählt wurde, so geschieht die Öffnung des Fachs automatisch zur Kontrolle. Wird "Zur Entnahme" ausgewählt, wird die Sendung als entnommen gekennzeichnet und das Fach für neue Sendungen freigegeben.

### B2B Fach öffnen

Der B2B Zusteller und der Wartungstechniker können Fächer im B2B-Bereich über diesen Menüpunkt öffnen. Es werden folgende Auswahlkriterien angeboten: "Nach Fachnummer", "Nach Kundennummer" und "Nach System-ID".
- "Nach Fachnummer" bedeutet die Nummer des Fachs am Automaten.
- "Nach Kundennummer" meint die Post24-Kundennummer. Sollte es mehrere Sendungen für den gleichen Empfänger geben, wird eine Liste angezeigt, aus der eine Sendung ausgewählt werden kann.
- "Nach System-ID" heißt nach der im Post24-System angelegten Parcel-ID. Hier sollte es keine Doppelten geben.

Im Auswahlmenü mit den Auswahlkriterien sowie unterhalb der Liste soll ein Feld "Abbrechen" eine Rückkehr zum Benutzermenü ermöglichen.

Wurde ein Fach ausgewählt, muss der Zweck der Öffnung abgefragt werden. Dies kann "Zur Entnahme" oder "Zur Kontrolle" sein. Handelt es sich um ein leeres Fach, das über die Fachnummer ausgewählt wurde, so ist die Öffnung des Fachs automatisch zur Kontrolle. Wird "Zur Entnahme" ausgewählt, wird die Sendung als entnommen gekennzeichnet und das Fach für neue Sendungen freigegeben.

Bei den Zustellautomaten, vor allem bei Paternostersystemen, könnte dieser Menüpunkt "Automaten Mängel" heißen. Zusätzlich wird ein Eingabefeld zur Verfügung gestellt. Hierzu muss eine virtuelle Tastatur am Bildschirm erscheinen.

Es sollte auch hier ein Feld "Abbrechen" geben, mit dem der Benutzer wieder in sein Benutzermenü kommt.

### Übersicht Tätigkeiten

| Gruppen Aufgaben | DPAG Zusteller | DPAG Empfänger | B2B Empfänger | B2B Zusteller | Post24-Mitarbeiter | Automatenhersteller |
|---|---|---|---|---|---|---|
| Authentifizierung | √ | √ | √ | √ | √ | √ |
| Call Center | √ | √ | √ | √ | √ | √ |
| Sendungen abholen DPAG | √ | √ | | | √ | ⊗ |
| B2B-Sendungen abholen | | | √ | √ | √ | ⊗ |
| Retoure einlegen | | | √ | | √ | ⊗ |
| Sendungen zustellen DPAG | √ | | | | √ | ⊗ |
| B2B-Sendungen zustellen | | | | √ | √ | ⊗ |
| Rücksendungen DPAG | √ | | | | √ | ⊗ |
| B2B-Rücksendungen | | | | √ | √ | ⊗ |
| Belegtes Fach öffnen DPAG | | | | | √ | ⊗ |
| Belegtes B2B-Fach öffnen | | | | √ | √ | ⊗ |
| Fach defekt | √ | | | √ | √ | ⊗ |
| √ : Diese Tätigkeiten sind für die jeweiligen Benutzergruppen besonders zweckmäßig. | | | | | | |
| ⊗ : Können zur Erfüllung der TL nötig sein. Dies ist vom Automatenhersteller zu prüfen. Gegebenenfalls Können weiter in diesem Dokument nicht beschriebene Tätigkeiten hinzukommen. | | | | | | |

Eine Implementation dieser Funktionen kann insbesondere in Abhängigkeit von der Wartungs- und Betreuungsintensität der elektronischen Paketfachanlage durch den Automatenhersteller geändert werden. An Stelle des Automatenherstellers können ohne Veränderung der genannten Funktionen andere Wartungsmitarbeiter die genannten Zugriffsrechte aufweisen.

## Patentansprüche

1. Elektronische Paketfachanlage mit einer Benutzerschnittstelle, wobei die Benutzschnittstelle ein Mittel zum Erfassen von Informationen von Benutzern der elektronischen Paketfachanlage aufweist,
**dadurch gekennzeichnet,**
**dass** die elektronische Paketfachanlage ein Mittel zur Zuordnung der Benutzer zu Benutzergruppen aufweist, und dass die elektronische Paketfachanlage mit einer Systemsteuerung versehen ist, die einem Benutzer Zugriff auf eine Auswahl mehrerer Funktionen der elektronischen Paketfachanlage in Abhängigkeit der Zuordnung des Benutzers zu einer Benutzergruppe gestattet.

2. Paketfachanlage nach Anspruch 1,
**dadurch gekennzeichnet,**
**dass** das Mittel zur Zuordnung von Benutzern zu Benutzergruppen derart mit der Benutzerschnittstelle verbunden ist, dass ihm die von der Benutzerschnittstelle erfassten Informationen für die Zuordnung der Benutzer zur Verfügung stehen.

3. Paketfachanlage nach einem oder beiden der Ansprüche 1 oder 2,
**dadurch gekennzeichnet,**
**dass** das Mittel zur Zuordnung der Benutzer in Benutzergruppen die Zuordnung aufgrund von über eine Datenleitung übermittelten Informationen vornimmt.

4. Paketfachanlage nach einem oder mehreren der vorangegangenen Ansprüche,
**dadurch gekennzeichnet,**
**dass** die Zuordnung zu den Benutzergruppen durch Erfassung einer Benutzeridentifikationsangabe und einen Vergleich der Benutzeridentifikationsangabe mit einem Inhalt einer Datenbank erfolgt.

5. Paketfachanlage nach einem oder mehrerer der vorangegangenen Ansprüche,
**dadurch gekennzeichnet,**
**dass** für verschiedene Benutzergruppen unterschiedliche Zugangsberechtigungen zu Funktionen der elektronischen Paketfachanlage auswählbar sind.

6. Paketfachanlage nach einem oder mehreren der vorangegangenen Ansprüche,
**dadurch gekennzeichnet,**
**dass** einzelne Paketfächer und/oder Gruppen von Paketfächern nur für einzelne Benutzergruppen zugänglich sind.

7. Paketfachanlage nach Anspruch 6,
**dadurch gekennzeichnet,**
**dass** die Zuordnung der Paketfächer zu den Benutzergruppen veränderbar ist.

8. Verfahren zum Betreiben einer elektronischen Paketfachanlage, wobei Informationen von Benutzern der elektronischen Paketfachanlage erfasst werden,
**dadurch gekennzeichnet,**
**dass** aufgrund der erfassten Informationen der Benutzer zu einer Benutzergruppe zugeordnet wird, und dass bei einer Steuerung der elektronischen Paketfachanlage einem Benutzer Zugriff auf eine Auswahl mehrerer Funktionen der elektronischen Paketfachanlage in Abhängigkeit der Zuordnung des Benutzers zu einer Benutzergruppe gestattet wird.

9. Verfahren nach Anspruch 8,
**dadurch gekennzeichnet,**
**dass** die Steuerung der Zugriffsmöglichkeiten so erfolgt, dass nach Zuordnung eines Benutzers zu wenigstens einer besonderen Benutzergruppe eine Funktion zu einem im Wesentlichen gleichzeitigen Öffnen mehrerer Paketfächer aktivierbar ist.

## Claims

1. An electronic parcel compartment system with a user interface, whereby the user interface has a means for acquiring information from users of the electronic parcel compartment system,
**characterized in that**
the electronic parcel compartment system has a means for assigning the users to user groups and **in that** the electronic parcel compartment system is provided with a system control that allows a user to have access to a Selection of several functions of the electronic parcel compartment system, depending on the user group to which the user belongs.

2. The parcel compartment system according to Claim 1,
**characterized in that**
the means for assigning users to user groups is connected to the user interface in such a way that the information acquired from the user interface is available to said means for the assignment of the users.

3. The parcel compartment system according to one or both of Claims 1 or 2,
**characterized in that**
the means for assigning the users to user groups makes this assignment on the basis of information transmitted via a data line.

4. The parcel compartment system according to one or more of the preceding claims,
**characterized in that**
the assignment to the user groups is performed by acquiring user identification information and by making a comparison of the user identification information with an entry in a database.

5. The parcel compartment system according to one or more of the preceding claims,
**characterized in that,**
for different user groups, different access authorizations to functions of the electronic parcel compartment system can be selected.

6. The parcel compartment system according to one or more of the preceding claims,
**characterized in that**
certain parcel compartments and/or groups of parcel compartments are accessible only to certain user groups.

7. The parcel compartment system according to Claim 6,
**characterized in that**
the assignment of the parcel compartments to the user groups can be changed.

8. A method for operating an electronic parcel compartment system, whereby information of users of the electronic parcel compartment system is acquired,
**characterized in that,**
on the basis of the acquired information, the user is assigned to a user group and **in that** the controls of the electronic parcel compartment system enable a user to have access to a selection of several functions of the electronic parcel compartment system, depending on the user group to which the user belongs.

9. The method according to Claim 8,
**characterized in that**
the control of the access possibilities is effectuated in such a way that, after assignment of a user to at least one specific user group, a function can be activated that causes an essentially simultaneous opening of several parcel compartments.

## Revendications

1. Dispositif électronique de casiers pour colis avec une interface d'utilisateur, dans lequel l'interface d'utilisateur comporte un moyen d'enregistrement d'informations relatives à des utilisateurs du dispositif électronique de casiers pour colis,
**caractérisé en ce que**
le dispositif électronique de casiers pour colis comporte un moyen d'attribution des utilisateurs à des groupes d'utilisateurs, et que le dispositif électronique de casiers pour colis comprend un pilote de système qui permet l'accès d'un utilisateur à une sélection de plusieurs fonctions du dispositif électronique de casiers pour colis en fonction de l'attribution de l'utilisateur à un groupe d'utilisateurs.

2. Dispositif de casiers pour colis selon la revendication 1,
**caractérisé en ce que**
le moyen d'attribution des utilisateurs à des groupes d'utilisateurs est connecté à l'interface utilisateur de telle manière que les informations enregistrées par l'interface d'utilisateur pour l'attribution des utilisateurs lui sont mises à disposition.

3. Dispositif de casiers pour colis selon l'une ou les deux des revendications 1 ou 2,
**caractérisé en ce que**
le moyen d'attribution des utilisateurs à des groupes d'utilisateurs entreprend l'attribution sur la base d'informations transmises par une liaison de données.

4. Dispositif de casiers pour colis selon une ou plusieurs des revendications précédentes,
**caractérisé en ce que**
l'attribution aux groupes d'utilisateurs est faite par l'enregistrement d'une indication d'identification d'utilisateur et la comparaison de l'indication d'identification d'utilisateur avec le contenu d'une base de données.

5. Dispositif de casiers pour colis selon une ou plusieurs des revendications précédentes,
**caractérisé en ce que**
des droit d'accès différents pour des fonctions du dispositif électronique de casiers pour colis peuvent être sélectionnés pour différents groupes d'utilisateurs.

6. Dispositif de casiers pour colis selon une ou plusieurs des revendications précédentes,
**caractérisé en ce que**
des casiers individuels pour colis et/ou des groupes de casiers pour colis ne sont accessibles que pour des groupes individuels d'utilisateurs.

7. Dispositif de casiers pour colis selon la revendication 6,
**caractérisé en ce que**
l'attribution des casiers à colis aux groupes d'utilisateurs est modifiable.

8. Procédé pour l'exploitation d'un dispositif électronique de casiers à colis, dans lequel des informations relatives à des utilisateurs du dispositif électronique de casiers pour colis sont enregistrées,
**caractérisé en ce que**
l'utilisateur est attribué à un groupe d'utilisateurs sur la base des informations enregistrées, et que dans un pilotage du dispositif électronique de casiers à colis l'accès à une sélection de plusieurs fonctions du dispositif électronique. de casiers à colis est donné à un utilisateur en fonction de l'attribution de l'utilisateur à un groupe d'utilisateurs.

9. Procédé selon la revendication 8,
**caractérisé en ce que**
le pilotage des possibilités d'accès est fait de manière à ce qu'après l'attribution d'un utilisateur à au moins un groupe particulier d'utilisateurs, une fonction est activée servant essentiellement à l'ouverture simultanée de plusieurs casiers à colis.
